# FASCICULE DE BREVET EUROPEEN

(11) **EP 1 381 499 B1**
(45) Date de publication et mention de la délivrance du brevet: **28.06.2006**
(21) Numéro de dépôt: 02727515.5
(22) Date de dépôt: 02.04.2002
(51) Int. Cl.: B29C 33/42, B29D 30/72, B60C 13/00

(54) **PROCEDE ET MOULE POUR DEPOSER UN MOTIF DE COULEUR SUR UN PNEUMATIQUE**
VERFAHREN UND VORRICHTUNG ZUM AUFBRINGEN EINES FARBMOTIVS AUF EINEN REIFEN
METHOD AND DEVICE FOR APPLYING A COLOURED MOTIF TO A TYRE

(30) Priorité: 19.04.2001 FR 0105338
(43) Date de publication de la demande: 21.01.2004
(73) Titulaire: Société de Technologie Michelin, 63000 Clermont-Ferrand Cedex 09 (FR); MICHELIN RECHERCHE ET TECHNIQUE S.A., CH-1763 Granges-Paccot (CH)
(72) Inventeur: PIALOT, Frédéric, F-63190 Moissat (FR)
(74) Mandataire: Diernaz, Christian
(86) Numéro de dépôt international: PCT/EP2002/003613
(87) Numéro de publication internationale: WO 2002/085595

(56) Documents cités:
- DE-A- 3 046 572
- US-A- 2 296 016
- US-A- 4 256 159
- US-A- 5 653 840
- PATENT ABSTRACTS OF JAPAN vol. 008, no. 160 (M-312), 25 juillet 1984 (1984-07-25) -& JP 59 055730 A (SUMITOMO GOMU KOGYO KK), 30 mars 1984 (1984-03-30)

## Description

La présente invention concerne les pneumatiques comportant en surface des marquages en couleur notamment des caractères ou des logos ou autres symboles.

Il est aujourd'hui souhaitable de pouvoir agrémenter les pneumatiques avec des marquages en couleur, de préférence avec plusieurs couleurs différentes et il est particulièrement souhaitable d'obtenir une parfaite netteté de moulage car ces marquages sont utilisés dans un but principalement esthétique. Pour obtenir de tels marquages plusieurs techniques sont connues de l'homme du métier et en particulier le brevet US 3,769,123 décrit un procédé de dépose de mélanges caoutchouteux de couleur au cours de la confection sur une ébauche de pneumatique. L'ébauche crue de pneumatique est ensuite introduite dans un moule de pneumatique afin de pouvoir être moulée et vulcanisée. Ce procédé n'assure pas une précision suffisante quant à la position des motifs colorés et requiert, par exemple, de recouvrir ces mélanges de couleur avec une couche mince de caoutchouc de couleur noire pour réaliser le moulage et la vulcanisation du pneumatique dans son moule avant de reprendre ce pneumatique pour enlever localement ce caoutchouc noir par meulage pour faire apparaître la ou les couleurs sous-jacentes du motif coloré tout en ayant des lignes de transition entre les différentes couleurs la netteté souhaitée.

Pour réduire le nombre d'opérations et obtenir, directement après moulage du pneumatique, un motif coloré contrastant avec la couleur de ce pneumatique, il a été décrit dans le brevet US 4,684,431 un procédé employant un moule comportant un logement à l'intérieur duquel est placé un insert ayant des propriétés magnétiques appropriées pour retenir un support métallique recouvert sur une de ses faces par une applique colorée en mélange de caoutchouc non vulcanisé. On introduit alors une ébauche de pneumatique à l'intérieur de ce moule pour effectuer le moulage, la vulcanisation des mélanges et la liaison de l'applique colorée audit pneumatique. Pendant le moulage du pneumatique, l'applique est solidaire du pneumatique avec son support; on enlève alors ce support métallique par pelage.

Dans un autre procédé, décrit dans le brevet US 1,371,501, on emploie un moule comportant lui aussi un logement destiné à recevoir un insert dans lequel est formé en creux un motif qui est rempli d'au moins un mélange de caoutchouc coloré non vulcanisé de façon qu'une fois l'insert portant le motif coloré est en place dans son logement, la continuité de la surface de moulage du moule soit réalisée à la fois par la surface de l'insert et par la surface du motif coloré avant l'emboîtage de l'ébauche de pneumatique.

Ces deux derniers procédés bien qu'intéressants puisque le nombre d'opérations sur le pneumatique après cuisson est réduit, ne sont pas pleinement satisfaisants en raison du fait que l'on a constaté que les limites des motifs colorés n'étaient pas suffsamment nettes et précises et qu'il s'ensuivait une altération de l'esthétique du pneumatique au voisinage de ces motifs. La demanderesse a constaté que cette altération était amplifiée avec la pression de moulage utilisée pour mouler le pneumatique : en particulier, le moulage d'un pneumatique bâti sur un noyau rigide conduit localement à des pressions très élevées qui se traduisent par des mouvements des mélanges caoutchouteux de couleurs différentes qui deviennent visibles sur le pneumatique moulé. Il est ainsi très délicat d'obtenir des marquages de couleur formant un relief sur la surface externe du pneumatique qui aient des contours très nets et précis.

Le brevet US 5653840 décrit un procédé de dépose d'un mélange de caoutchouc cru coloré formant un motif contrastant sur la surface extérieure d'un pneumatique.

Ce brevet décrit aussi un moule pour pneumatique, comportant une coquille pour le moulage d'un flanc, la coquille présentant une cavité débouchant sur la surface de moulage du moule, cette cavité étant calibrée de manière appropriée pour former une réserve destinée à absorber les dilatations subies par le mélange pendant la vulcanisation et le moulage du pneumatique.

Dans le document DE 3046572 il est décrit un procédé employant un insert amovible servant d'emporte pièce pour former un motif coloré; ce document ne décrit ni ne suggère la caractéristique selon laquelle le volume de la cavité est supérieur au volume de mélange non vulcanisé déposé dans ladite cavité.

La présente invention se réfère à un procédé de réalisation d'un motif contrastant su la surface extérieure d'un pneumatique et formé d'au moins deux couleurs différentes selon les étapes spécifiées dans la revendication 1.

La présente invention se réfère aussi à un moule pour pneumatique comportant un motif de couleur formé d'au moins deux couleurs distinctes selon la revendication 3.

Des formes avantageuses de l'invention font l'objet des revendications dépendantes.

La présente invention propose de déposer des couches de mélange de caoutchouc en couleurs différentes sur un pneumatique permettant d'obtenir une netteté et une précision des motifs colorés qui soient bonnes de façon systématique (c'est-à-dire à chaque moulage de pneumatique) sans avoir à reprendre les pneumatiques moulés. Le procédé selon l'invention permet de maîtriser les mouvements des mélanges de couleurs différentes et de s'assurer que les zones de transition, entre la couleur du pneumatique et les différentes couleurs des motifs, ne sont pas situées dans des régions affectant la netteté des motifs.

Le procédé de dépose, d'au moins un mélange de caoutchouc cru coloré formant un motif contrastant sur la surface extérieure d'un pneumatique, comprend les étapes suivantes :
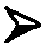 préparer une ébauche du pneumatique cru à mouler, comportant tous les constituants sauf le ou les mélanges de caoutchouc coloré,
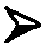 déposer le ou les caoutchouc(s) colorés dans au moins une cavité formée sur un insert amovible, chaque cavité ayant la forme générale du motif à mouler et présentant un volume total V0, le volume total de caoutchouc coloré V1 non vulcanisé placé dans chaque cavité étant inférieur au volume V0;
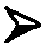 montage de l'insert dans un logement approprié prévu sur la surface de moulage du moule du pneumatique ;
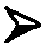 engager l'ébauche de pneumatique à l'intérieur du moule;
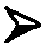 mouler et vulcaniser le pneumatique.

Préférentiellement, le volume V1 de caoutchouc cru est inférieur à 80% du volume V0 de la cavité (ce dernier volume V0 correspondant sensiblement au volume du motif en relief qui est moulé sur la surface du pneumatique).

Il a été constaté qu'il était particulièrement intéressant industriellement de combiner la caractéristique selon laquelle le volume du motif coloré est inférieur au volume de la cavité avec la caractéristique selon laquelle chaque cavité sur un insert amovible destiné à être amené dans un logement prévu sur la surface de moulage du moule afin de faciliter la mise en place des mélanges colorés pour former un motif de couleur et optimiser les temps de fabrication des pneumatiques pourvus de motifs colorés (la formation d'un motif coloré à même le moule en général chaud est délicate). Cette combinaison est particulièrement intéressante dans le cas de motifs colorés à plusieurs couleurs.

Le procédé selon l'invention est avantageusement applicable à l'obtention de motifs colorés comportant plusieurs couleurs, les zones de transition entre les différentes couleurs n'étant pas situées dans des régions affectant la netteté des motifs. Dans ce but, le procédé selon l'invention comprend les étapes suivantes:
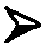 préparer une ébauche du pneumatique cru à mouler, comportant tous les constituants sauf le ou les mélanges de caoutchouc coloré,
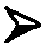 déposer un premier mélange de caoutchouc coloré dans une partie d'une cavité formée sur un insert amovible et correspondant au motif de couleur à mouler, cette partie de cavité présentant un volume supérieur au volume dudit premier mélange de caoutchouc non vulcanisé placé dans ladite cavité ;
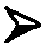 déposer au moins un deuxième mélange de caoutchouc de couleur différente du premier mélange coloré dans la partie complémentaire de la cavité et sur le premier mélange, le volume de ce deuxième mélange de caoutchouc étant tel que la somme des volumes de tous les mélanges colorés formant le motif coloré est inférieur au volume total de la cavité correspondant au volume du motif ;
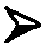 montage de l'insert dans un logement approprié prévu sur la surface de moulage du moule du pneumatique ;
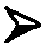 engager l'ébauche de pneumatique à l'intérieur du moule;
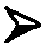 mouler et vulcaniser le pneumatique.

L'exemple décrit avec deux mélanges de couleurs différentes peut aisément être étendu au cas de plus de deux mélanges, chaque mélange devant occuper une partie seulement de la cavité et la somme des volumes des différents mélanges colorés devant être inférieure au volume total de la cavité.

Les marquages réalisés par ce procédé peuvent être globalement ou partiellement en relief par rapport à la surface du pneumatique moulé ou encore apparaître au niveau de la surface du pneumatique sans être en relief. Dans tous les cas, il est avantageux que les parois limitant le motif coloré pendant le moulage et la vulcanisation soient en saillie par rapport à la surface de moulage du moule de manière à mouler autour dudit motif une plus ou moins fine rainure qui contribue elle aussi à masquer les irrégularités de moulage et à donner une très bonne impression de marquage. Ces parties en saillies peuvent faire partie du moule ou de l'insert lui même.

L'invention concerne également un moule pour pneumatique destiné à la mise en oeuvre du procédé de l'invention. Ce moule comporte une coquille pour le moulage d'un flanc, ladite coquille présentant un logement débouchant à la surface de moulage du moule, et un insert à monter dans le logement, l'insert ayant une surface de moulage correspondant au(x) marquage(s) à mouler. Cet insert comporte au moins une cavité débouchant sur sa surface de moulage, cette cavité étant calibrée de manière appropriée pour former une réserve destinée à absorber les dilatations subies par les mélanges pendant la vulcanisation et le moulage du pneumatique et ainsi à favoriser la réalisation d'un marquage esthétiquement réussi.

Ladite réserve comprend au moins un évidement laissé vide de tout mélange cru au moment du remplissage de la cavité. Des extensions sont formées sur le fond de la cavité dudit insert de façon à délimiter chaque couleur du motif.

Préférentiellement le moule pour pneumatique selon l'invention comprend des moyens pour maintenir l'insert en place dans son logement avant introduction d'une ébauche de pneumatique et pendant le moulage. Afin d'éviter que l'insert reste sur le pneumatique pendant le démoulage, il est avantageux que les moyens de maintien de l'insert exercent sur ledit insert des efforts supérieurs aux efforts de contact entre la surface du motif coloré moulé et l'insert.

Par le procédé selon l'invention on peut obtenir un pneumatique comportant sur sa surface extérieure une superposition de couches de mélanges caoutchouteux colorés formant un motif coloré, la couche la plus à l'extérieur par rapport au pneumatique étant de surface plus faible que la couche immédiatement adjacente vers l'intérieur du pneumatique, et la couche la plus à l'intérieur en direction du pneumatique étant présente sous la totalité du motif, l'ensemble pneumatique et couches de mélanges colorés ayant été vulcanisé en même temps.

D'autres caractéristiques et avantages de l'invention ressortent de la description faite ci-après en référence aux dessins annexés qui montrent, à titre d'exemples non limitatifs, des formes de réalisation de l'objet de l'invention.
Figure 1 : vue partielle d'un pneumatique comportant un motif de couleur en relief obtenu selon un procédé de l'art antérieur;
Figure 2 vue d'un insert dans lequel est placé un mélange de couleur, l'insert étant en place dans un moule de pneumatique pour la mise en oeuvre d'un procédé pour la réalisation d'un marquage en relief;
Figure 3 vue partielle d'un pneumatique comportant un marquage en relief après moulage selon le procédé employant le moule de la figure 2;
Figure 4 vue en coupe partielle d'un moule de pneumatique selon l'invention équipé d'un insert comportant des parties en saillie sur la surface de moulage et destiné à déposer un motif composé de deux couleurs distinctes;
Figure 5 vue en coupe du marquage obtenu avec le moule présenté à la figure 4 ;
Figure 6 coupe d'une variante d'insert comprenant un moyen de fixation sur le moule.

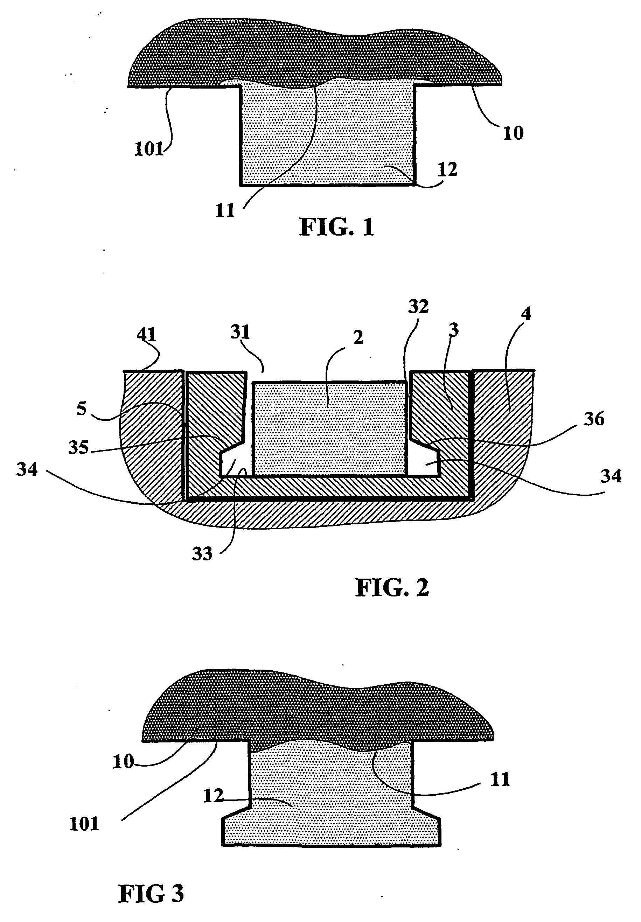

La figure 1 présente une coupe d'un marquage de couleur 12 contrastant et en relief sur un pneumatique 10 réalisé selon un procédé de l'état de la technique : on constate que très souvent la limite 11 entre le motif et le pneumatique apparaît sur la surface 101 et est imprécise et irrégulière, ce qui nuit à une bonne esthétique et à un bon aspect général.

Sur la figure 2, on montre une coupe partielle d'un moule de pneumatique et plus particulièrement d'une coquille 4 de moule (c'est-à-dire une partie ayant une surface de moulage 41 destinée à mouler la surface externe d'un flanc de pneumatique). Cette coquille 4 comprend un logement 5 débouchant sur la surface de moulage et à l'intérieur duquel est placé un insert 3 dont le contour extérieur est adapté pour épouser le contour intérieur du logement. Des moyens de fixation de l'insert dans son logement pendant l'opération de moulage sont prévus mais non représentés ici.

L'insert 3 comprend une cavité 31 délimitée par des parois latérales 32 et une paroi de fond 33. La paroi de fond est prolongée transversalement à l'intérieur des parois latérales 32 pour former deux rainures 34. Des dépouilles 35, 36 sont formées sur les parois latérales 32 pour permettre un démoulage plus aisé après vulcanisation des mélanges de caoutchouc.

Une fois l'insert 3 sorti de son logement 5, la cavité 31 est partiellement remplie avec un profilé 2 en mélange non vulcanisé de caoutchouc de couleur qui est posé en appui sur le fond de ladite cavité. En outre, un jeu est prévu entre ce profilé 2 et les parois 32 de la cavité de manière à ce que le volume total du profilé soit inférieur au volume total de ladite cavité. Après remplissage de la cavité de l'insert, ce dernier est placé dans le logement du moule et rendu solidaire dudit moule. La suite des opérations de moulage consiste alors à introduire un bandage de pneumatique à l'intérieur du moule ainsi constitué et à procéder alors au moulage et à la vulcanisation des mélanges de caoutchouc composant ledit bandage et ceux composant le motif de couleur faisant contraste avec la couleur des mélanges du bandage pneumatique. Le moulage obtenu avec cet insert est représenté en coupe à la figure 3 ; sur cette figure, on voit que la ligne 11 marquant la frontière entre les mélanges de caoutchouc de couleurs différentes, formant d'un côté le pneumatique 10 et de l'autre le motif coloré 12, n'apparaît plus sur la surface 101 du pneumatique de part et d'autre du motif. Vu de l'extérieur, le motif coloré 12 apparaît avoir des contours plus nets que dans le cas montré avec la figure 1.

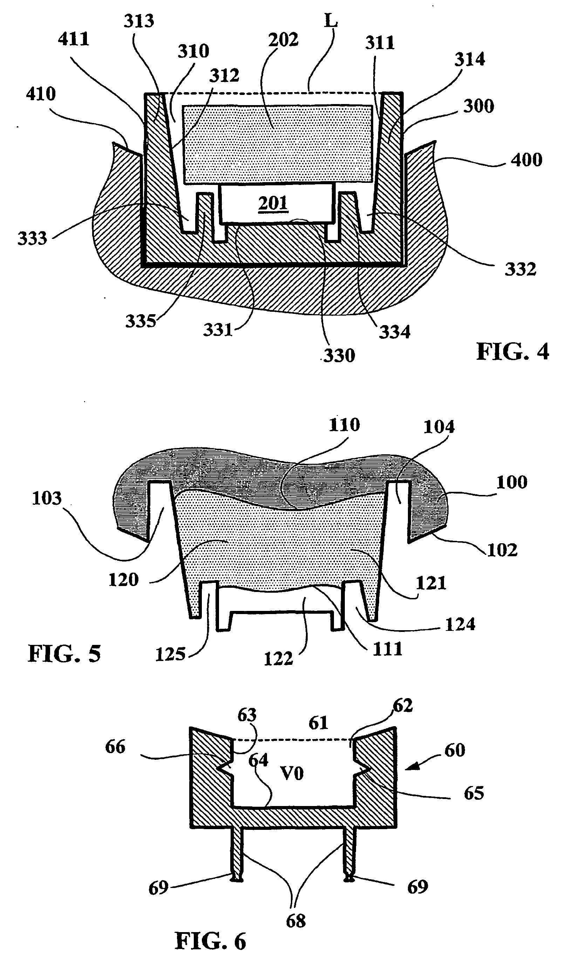

La figure 4 présente un moule pour le moulage d'un pneumatique comportant un motif de couleur formé de deux couleurs distinctes. Sur la surface de moulage 410 d'un moule 400 est réalisé un logement 411 destiné à recevoir un insert 300. Cet insert 300 comporte une cavité 310 délimitée par des parois latérales 311 et 312 et un fond 330; cette cavité 310 a un volume total V0 (limité dans la partie supérieure de la figure 4 par la ligne L en traits pointillés). L'insert 300 comporte des extensions 313, 314 faisant saillies sur la surface de moulage 410 et prévues pour mouler des rainures dans le pneumatique (visibles sur la figure 5) pour mieux délimiter le motif de couleur.

Le fond 330 de la cavité est divisé en trois parties : une partie centrale 331 et deux parties latérales 332, 333, la partie centrale étant séparée des parties latérales par des nervures 334 et 335 faisant saillie sur le fond et s'étendant à l'intérieur de la cavité 310.

Dans le procédé selon l'invention, on dispose sur la partie centrale de la cavité 310 de l'insert 300 une couche de mélange de caoutchouc 201 d'une première couleur et sur cette première couche une seconde couche 202 d'une deuxième couleur différente de la première. Le volume de la première couche 201 est prévu pour être sensiblement inférieur au volume partiel de la cavité 310 limité par les nervures 334 et 335; la présence de ces nervures permet d'obtenir une excellente transition entre les première et deuxième couleurs du motif après moulage. La somme des volumes V1 des couches de couleurs différentes est inférieur au volume V0 de la cavité.

Après cette première opération de garnissage de l'insert avec les mélanges de couleur, on place ledit insert dans le logement prévu sur le moule et on le maintient en place avec des moyens appropriés pour réaliser le moulage et la vulcanisation du pneumatique et des mélanges de couleur formant le motif.

Le résultat obtenu avec le procédé de l'invention est visible à la figure 5 qui montre une coupe partielle d'une surface d'un pneumatique 100 de couleur noire sur laquelle est moulé un motif 120 présentant deux couleurs différentes et non noires. Globalement le motif moulé est très légèrement en relief par rapport à la surface extérieure 102 du pneumatique; ce motif est cerné par des rainures 103 et 104. Une première limite 111 est visible sur cette coupe entre les deux couches de mélanges de couleurs différentes 121 et 122 composant le motif 120; les extrémités latérales de cette limite 111 débouchent dans deux rainures 124 et 125 moulées par les nervures 334 et 335 présentes sur le fond de la cavité de l'insert. Une deuxième limite 110 est visible entre le mélange de couleur noire formant le pneumatique 100 et le mélange 121 du motif; cette limite 110 débouche dans les rainures 103 et 104.

Le fait que les extrémités des limites entre les mélanges de couleurs différentes apparaissent sur les parois des rainures sur le pneumatique moulé permet d'améliorer très sensiblement l'esthétique générale dudit pneumatique.

Le procédé de l'invention qui a été décrit permet d'obtenir un pneumatique comportant sur sa surface extérieure une superposition de couches de mélanges caoutchouteux colorées, la couche extérieure au pneumatique étant de surface plus faible que la couche immédiatement adjacente à l'intérieur, celle-ci étant présente sous la totalité de la surface de la couche la plus extérieure, l'ensemble pneumatique et couches de mélanges colorés ayant été vulcanisé en même temps.

Dans la variante présentée avec la figure 5, les points du motif coloré les plus à l'extérieur par rapport au pneumatique sont à l'extérieur par rapport à la surface dudit pneumatique; il est bien entendu possible de réaliser un motif se trouvant totalement en retrait par rapport à ladite surface.

Pour faciliter le démoulage et en particulier le démoulage du motif de couleur hors de l'insert, il est avantageux de prévoir que les parois latérales de la cavité présente un angle de dépouille de quelques degrés (préférentiellement, au moins 5° dans le cas d'un usinage mécanique de la cavité dans l'insert).

Avantageusement, il est possible de recouvrir l'ensemble des mélanges de couleur garnissant un insert avant de déposer ce dernier dans son logement sur le moule par un mélange de caoutchouc ayant des caractéristiques appropriées pour par exemple assurer un meilleur maintien en place des mélanges de couleur ou pour éviter par la suite toute migration d'éléments chimiques du mélange composant le pneumatique vers les mélanges de couleur du motif et qui pourraient altérer l'aspect dudit motif.

Enfin, la figure 6 montre en coupe une variante d'insert 60 comportant une cavité 61 de volume total V0 délimitée par des parois latérales 62, 63 et un fond 64. Sur les parois latérales 62 et 63 sont réalisées deux rainures 65 et 66 destinées à être remplies par le mélange de couleur pendant l'opération de moulage.

L'insert 60 est pourvu sur sa face extérieure et antérieure destinée à venir en contact avec le logement sur le moule avec des pions 68 faisant protubérance; ces pions, de longueur supérieure à l'épaisseur du moule au niveau du logement, sont prévus pour être enfilés dans des orifices réalisés sur le moule pour déboucher à l'extérieur du moule. Il est en outre prévu un dispositif de blocage pouvant prendre et relâcher l'extrémité dudit pion afin d'immobiliser l'insert dans son logement.

Par exemple, l'extrémité de chaque extension comporte une partie formant un étranglement de section 69 destinée à coopérer avec une pièce de verrouillage (non représentée) formée par exemple dans une lame pourvue d'une encoche de dimensions appropriées pour encadrer chaque étranglement de section et maintenir en place l'insert dans son logement pour le moulage et les manipulations diverses du moule avant et après moulage.

Par ailleurs, il peut être prévu des moyens d'éjection des pions pour permettre l'extraction de l'insert après moulage d'un pneumatique.

Une autre variante intéressante de liaison d'un insert dans un logement dans un moule de pneumatique consiste à réaliser ledit insert dans un matériau magnétique et de pourvoir ledit moule avec au moins un aimant permanent ayant la propriété de tenir à des températures au moins égales à la température de vulcanisation des pneumatiques ainsi qu'à un nombre approprié de cycles de vulcanisation. Il est avantageux de prévoir que la force magnétique de maintien en place de l'insert est supérieure à la force de collage qui peut exister entre la surface des mélanges de caoutchouc composant le motif coloré de façon à ce qu'au cours du démoulage l'insert reste en place dans son logement et ne suive pas le pneumatique. Après démoulage du pneumatique, un moyen de préhension est employé qui est capable d'exercer sur l'insert un effort supérieur à la force magnétique exercée par le moule sur l'insert (avantageusement, ce dernier moyen de préhension est capable d'exercer une force magnétique).

L'invention n'est pas limitée aux exemples décrits et les combinaisons des diverses variantes présentées peuvent être aisément réalisées par une personne du métier sans sortir du cadre de cette invention.

## Revendications

1. Procédé de réalisation d'un motif contrastant sur la surface extérieure d'un pneumatique et formé d'au moins deux couleurs différentes, ce procédé comprenant les étapes suivantes:
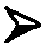 préparer une ébauche du pneumatique cru à mouler, comportant tous les constituants sauf les mélanges de caoutchouc coloré,
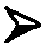 former une cavité (31) dans un insert (3) amovible, cette cavité (31) ayant la forme générale du motif à mouler et un volume total V0, cette cavité (31) comprenant sur au moins une de ses parois (32, 33), au moins un évidement (34) laissé vide de tout mélange cru au moment du remplissage de la cavité par les mélanges coloré(s),
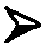 déposer les caoutchoucs colorés dans la cavité (31),
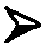 monter l'insert (3) dans un logement (5) approprié prévu sur la surface de moulage du moule (4)° du pneumatique ;
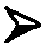 engager l'ébauche de pneumatique à l'intérieur du moule ;
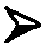 mouler et vulcaniser le pneumatique,
ce procédé étant **caractérisé en ce que** les couches de couleurs différentes sont mises en place de façon successive les unes sur les autres dans la cavité (31) formant un motif, la couche la plus à l'extérieur de ladite cavité recouvrant la totalité de la surface dudit motif de façon à assurer une tenue des différentes couches pendant le montage de l'insert (3) dans le moule, et **en ce que** le volume total de caoutchouc coloré V1 non vulcanisé placé dans la cavité (31) est inférieur au volume V0 de la cavité (31).

2. Procédé selon la revendication 1 **caractérisé en ce que** le volume V0 de chaque cavité (31) de l'insert (3) est tel que le volume de caoutchouc cru V1 est inférieur à 80% du volume V0.

3. Moule pour pneumatique comportant un motif de couleur formé d'au moins deux couleurs distinctes, ce moule comportant une coquille (400) pour le moulage d'un flanc, la coquille (400) présentant un logement (411) débouchant à la surface de moulage (410) du moule, et un insert (300) à monter dans 1e logement (411), l'insert (300) ayant une surface de moulage correspondant au(x) marquage(s) à mouler, l'insert (300) comportant au moins une cavité (310) débouchant sur sa surface de moulage et délimitée par des parois latérales (311, 312) et un fond (330), la cavité (310) étant calibrée de manière appropriée pour former une réserve destinée à absorber les dilatations subies par les mélanges pendant la vulcanisation et le moulage du pneumatique, ladite réserve comprenant au moins un évidement (34) laissé vide de tout mélange cru au moment du remplissage de la cavité, ce moule étant **caractérisé en ce que** des extensions (313, 314, 334, 335) sont formées sur le fond (330) de la cavité (310) de l'insert (300) de façon à délimiter chaque couleur du motif.

4. Moule pour pneumatique selon la revendication 3 **caractérisé en ce que** des moyens (68, 69) sont prévus pour maintenir l'insert (3) en place dans son logement (5), lesdits moyens permettant, une fois le moulage réalisé de sortir le pneumatique du moule tout en laissant en place l'insert dans son logement.

5. Moule pour pneumatique selon la revendication 4 **caractérisé en ce que** l'insert (3) comprend au moins un pion (68) faisant protubérance au dos de l'insert, de longueur supérieure à l'épaisseur de la coquille au niveau du logement (5), et **en ce qu'**il est prévu à la fois un dispositif de blocage pouvant prendre et relâcher l'extrémité dudit pion afin d'immobiliser l'insert dans son logement et un dispositif d'éjection pour sortir ledit insert hors de son logement.

6. Moule pour pneumatique selon la revendication 4 **caractérisé en ce que** l'insert (3) est réalisé au moins partiellement dans un matériau magnétique et **en ce que** des aimants permanents et résistants au moins à la température de vulcanisation sont prévus dans le moule pour exercer une force magnétique appropriée pour maintenir en place ledit insert dans son logement, cette force étant également appropriée pour maintenir en place l'insert pendant la sortie de chaque pneumatique moulé hors du moule.

7. Moule pour pneumatique selon l'une des revendications 3 à 6 **caractérisé en ce que** les parois (311, 312) de chaque cavité (310) de l'insert sont inclinées d'au moins 5° par rapport à une perpendiculaire à la surface du moule de façon à faciliter le démoulage du motif.

## Claims

1. A process for producing a contrasting motif formed of at least two different colours on the outer surface of a tyre, this process comprising the following steps:
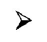 preparing a blank of the uncured tyre to be moulded, comprising all the constituents except for the coloured rubber mixes,
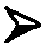 forming a cavity (31) in a removable insert (3), this cavity (31) having the general form of the motif to be moulded and having a total volume V0, this cavity (31) comprising, on at least one of its walls (32, 33), at least one recess (34) left empty of any uncured mix at the time of filling the cavity by the coloured mixes,
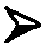 depositing the coloured rubbers in the cavity (31),
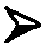 mounting the insert (3) in a suitable housing (5) provided on the moulding surface of the mould (4) for the tyre;
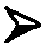 engaging the tyre blank within the mould;
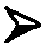 moulding and vulcanising the tyre,
this process being **characterised in that** the layers of different colours are put in place successively one on another in the cavity (31) forming a motif, the layer farthest to the outside of said cavity covering the entire surface of said motif so as to ensure holding of the different layers during mounting of the insert (3) in the mould, and **in that** the total volume of non-vulcanised coloured rubber V1 placed in the cavity (31) is less than the volume V0 of the cavity (31).

2. The process according to Claim 1, **characterised in that** the volume V0 of each cavity (31) of the insert (3) is such that the volume of uncured rubber V1 is less than 80% of the volume V0.

3. A mould for tyres comprising a coloured motif formed of at least two distinct colours, this mould comprising a shell (400) for moulding a sidewall, the shell (400) having a housing (411) opening on to the moulding surface (410) of the mould, and an insert (300) to be mounted in the housing (411), the insert (300) having a moulding surface corresponding to the marking(s) to be moulded, the insert (300) comprising at least one cavity (310) opening on to its moulding surface and defmed by lateral walls (311, 312) and a bottom (330), the cavity (310) being calibrated suitably to form a reserve intended to absorb the dilations to which the mixes are subjected during vulcanisation and moulding of the tyre, said reserve comprising at least one recess (34) left empty of any uncured mix at the time of filling the cavity, this mould being **characterised in that** extensions (313, 314, 334, 335) are formed on the bottom (330) of the cavity (310) of the insert (300) so as to delimit each colour of the motif.

4. A mould for tyres according to Claim 3, **characterised in that** means (68, 69) are provided for holding the insert (3) in place in its housing (5), said means making it possible, once the moulding has been effected, to remove the tyre from the mould while leaving the insert in place in its housing.

5. A mould for tyres according to Claim 4, **characterised in that** the insert (3) comprises at least one pin (68) protruding from the back of the insert, of a length greater than the thickness of the shell at the level of the housing (5), and **in that** there is provided both a blocking device which can hold and release the end of said pin in order to immobilise the insert in its housing and an ejection device for removing said insert from its housing.

6. A mould for tyres according to Claim 4, **characterised in that** the insert (3) is produced at least in part from a magnetic material and **in that** permanent magnets which resist at least the vulcanisation temperature are provided in the mould to exert an appropriate magnetic force for holding said insert in place in its housing, this force also being appropriate for holding the insert in place during removal of each moulded tyre from the mould.

7. A mould for tyres according to one of Claims 3 to 6, **characterised in that** the walls (311, 312) of each cavity (310) of the insert are inclined by at least 5° relative to a line perpendicular to the surface of the mould so as to facilitate the demoulding of the motif.

## Patentansprüche

1. Verfahren zur Herstellung eines Motivs, das sich an der äußeren Oberfläche eines Luftreifens abhebt und aus mindestens zwei unterschiedlichen Farben gebildet ist, wobei das Verfahren die folgenden Schritte umfasst:
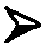 Herstellen eines zu formenden, unvulkanisierten Reifenrohlings, der alle Bestandteile aufweist, abgesehen von den farbigen Kautschukmischungen,
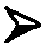 Ausbilden eines Hohlraums (31) in einem auswechselbaren Einsatz (3), wobei der Hohlraum (31) die allgemeine Form des zu formenden Motivs aufweist und ein Gesamtvolumen V0 besitzt und dieser Hohlraum (31) an mindestens einer Wand (32, 33) mindestens eine Aussparung (34) aufweist, die beim Füllen des Hohlraums mit der oder den farbigen Mischung(en) von keiner rohen Mischung ausgefüllt wird,
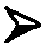 Anbringen der farbigen Kautschuke in dem Hohlraum (31);
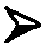 Einbauen des Einsatzes (3) in einer Aussparung (5), die an der Formfläche der Form (4) des Luftreifens vorgesehen ist;
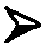 Anbringen des Reifenrohlings in der Form;
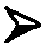 Formen und Vulkanisieren des Luftreifens,
wobei das Verfahren **dadurch gekennzeichnet ist, dass** die Lagen unterschiedlicher Farben aufeinander sukzessive in den Hohlraum (31), der ein Motiv bildet, gegeben werden, wobei die am weitesten außen in dem Hohlraum liegende Lage die gesamte Oberfläche des Motivs bedeckt, so dass sichergestellt ist, dass die verschiedenen Lagen während der Montage des Einsatzes (3) in der Form gehalten werden, und **dadurch**, dass das Gesamtvolumen des in dem Hohlraum vorgesehenen, unvulkanisierten, farbigen Kautschuks V1 kleiner ist als das Volumen V0 des Hohlraums (31).

2. Verfahren gemäß Anspruch 1, **dadurch gekennzeichnet, dass** das Volumen V0 jedes Hohlraums (31) des Einsatzes (3) so ist, dass das Volumen des Rohkautschuks V1 weniger als 80 % des Volumens V0 beträgt.

3. Form für einen Luftreifen, der ein farbiges Motiv aufweist, das aus mindestens zwei unterschiedlichen Farben gebildet wird, wobei die Form eine Seitenschale (400) zum Formen der Flanken aufweist, wobei die Schale (400) eine Aussparung (411) besitzt, die an der Formfläche (410) der Form mündet, und einen Einsatz (300) aufweist, der in der Aussparung (411) angebracht werden soll, wobei der Einsatz (300) eine Formfläche besitzt, die der oder den zu formenden Markierung(en) entspricht, wobei der Einsatz (300) mindestens einen Hohlraum (310) besitzt, der an der Formfläche mündet und von Seitenwänden (311, 312) und einem Boden (330) begrenzt wird, wobei der Hohlraum (310) so ausgelegt ist, dass er geeignet ist, um einen Reserveraum zu bilden, der dazu dienen soll, die sich ausdehnenden Teile der Mischungen während der Vulkanisation und des Formens des Luftreifens aufzunehmen, wobei der Reserveraum mindestens eine Aussparung (34) aufweist, die beim Füllen des Hohlraums von keiner Mischung ausgefüllt wird, wobei die Form **dadurch gekennzeichnet ist, dass** hervorstehende Teile (313, 314, 334, 335) am Boden (330) des Hohlraums (310) des Einsatzes (300) ausgebildet sind, die jede Farbe des Motivs begrenzen sollen.

4. Form für einen Luftreifen nach Anspruch 3, **dadurch gekennzeichnet, dass** Einrichtungen (68, 69) vorgesehen sind, damit der Einsatz (3) in der Aussparung (5) gehalten wird, wobei die Einrichtungen es ermöglichen, dass der Luftreifen nach durchgeführter Formgebung aus der Form entnommen und gleichzeitig der Einsatz in seiner Aussparung belassen werden kann.

5. Form für einen Luftreifen nach Anspruch 4, **dadurch gekennzeichnet, dass** der Einsatz (3) mindestens einen Stift (68) aufweist, der am Rücken des Einsatzes hervorsteht und dessen Länge auf der Höhe der Aussparung (5) größer ist als die Dicke der Schale, und **dadurch**, dass gleichzeitig eine Einrichtung zur Arretierung vorgesehen ist, die das Ende des Stiftes aufnehmen und freigeben kann, damit der Einsatz in der Aussparung festgehalten wird, und gleichzeitig mit einer Auswurfeinrichtung versehen ist, damit der Einsatz aus der Aussparung entnommen werden kann.

6. Form für einen Luftreifen nach Anspruch 4, **dadurch gekennzeichnet, dass** der Einsatz (3) zumindest teilweise aus einem magnetischen Material realisiert ist und **dadurch**, dass Permanentmagneten, die zumindest die Vulkanisationstemperatur aushalten können, in der Form vorgesehen sind, damit sie eine Magnetkraft ausüben können, die geeignet ist, um den Einsatz in der Aussparung zu halten, wobei die Kraft ebenfalls geeignet ist, damit der Einsatz während der Entnahme des geformten Luftreifens aus der Form gehalten werden kann.

7. Form für einen Luftreifen nach einem der Ansprüche 3 bis 6, **dadurch gekennzeichnet, dass** die Wände (311, 312) jedes Hohlraums (310) des Einsatzes um mindestens 5° in Bezug auf eine senkrechte Linie zur Formfläche geneigt sind, um das Entformen des Motivs zu erleichtern.
